# EUROPEAN PATENT APPLICATION

(11) **EP 4 092 083 A1**
(43) Date of publication of application: **23.11.2022**
(21) Application number: 21174474.3
(22) Date of filing: 18.05.2021
(51) Int. Cl.: C08L 69/00, C08K 3/36, C08K 5/5415

(54) **POLYCARBONATE BLEND COMPOSITIONS HAVING IMPROVED WEATHERABILITY AND SCRATCH RESISTANCE**

(71) Applicant: Covestro LLC, Pittsburgh, PA 15205 (US)
(72) Inventor: Rogunova, Marina, Pittsburgh, 15241 (US); Montgomery, Michelle, Pittsburgh, 15205 (US)
(74) Representative: Levpat

(57) **Abstract**

A thermoplastic molding composition comprises polycarbonate, and demonstrates improved weatherability and having a high scratch and mar resistance. The composition comprises: (A) 50 to 90 percent by weight relative to the weight of the composition (pbw) of an aromatic (co)poly(ester)carbonate, (B) greater than 0 wt.% to 10 wt. % of a mineral filler comprising quartz or silica, and (C) greater than 0 wt.% to 5 wt. % of a high molecular weight non-polar lubricant and most preferably a siloxane lubricant, wherein the siloxane is not polymerized with the aromatic (co)poly(ester)carbonate. The composition may further comprise a rubber-modified graft polymer, and a vinyl copolymer.

## Description

### Field of the Invention

The invention is directed to a thermoplastic molding composition comprising polycarbonate, and demonstrating improved weatherability and having a high scratch and mar resistance.

### Technical Background of the Invention

Commercial blends of polycarbonate and other copolymers offer good stiffness, tensile and flexural strength and high impact resistance for a variety of applications when molded. However, many such blends have limited suitability when being used in applications where they may be subject to scratching and marring, that may cause different surface damage in the form of stress whitening, reduction of gloss and even alter its color or finish. Another issue is when such molded products are exposed to a variety of environmental stresses, such as ultra-violet (UV) light and humidity, for a prolonged period of time, their appearance may be likewise diminished. One solution has been to add glass fibers to the composition. However, such compositions may lead to poor impact performance, high notched sensitivity or poor surface quality. Another solution has been to add minerals. While it is harder to scratch the surface that have been fortified with minerals, the scratches tend to be more noticeable, due to stress-whitening. Thus, there is a need for a new polycarbonate molding composition that can withstand scratching, marring and the effects of outdoor weather, while maintaining excellent performance and surface appearance.

### Summary of the Invention

In an embodiment, a thermoplastic molding composition comprises: (A) 50 to 90 percent by weight relative to the weight of the composition (pbw) of an aromatic (co)poly(ester)carbonate, (B) greater than 0 wt.% to 10 wt. % of a mineral filler comprising quartz or silica, and (C) greater than 0 wt.% to 5 wt. % of a high molecular weight non-polar lubricant and most preferably a siloxane lubricant, wherein the siloxane is not polymerized with the aromatic (co)poly(ester)carbonate.

In another embodiment, the aromatic (co)poly(ester)carbonate is present in the composition in an amount of 58 to 80 wt. %, in yet another the aromatic (co)poly(ester)carbonate is present in the composition in an amount of 64 to 73 wt. %, and in still another, the aromatic (co)poly(ester)carbonate is not polymerized with any polysiloxane.

In a different embodiment, the mineral filler is present in the composition in an amount of 1 to 10 wt.%, and preferably from 2 - 5%. In another, the mineral filler is quartz. In another, it is silica. In still another, the mineral filler is a fused silica flour having a pH measured according to DIN ISO 10390 of 5.0 to 8.0. In yet another, the fused silica flour has an average particle size d₅₀ of 0.25 to 10.0 µm and a content of metal oxides ≤2% by weight based on component B. In a new embodiment, component B has a content of aluminium oxide of ≤1 % by weight. In a different one, component B has an Fe₂O₃ content of ≤0.1 % by weight. In another component B has an average particle size d₅₀ of 3 to 5 µm. In still another, component B has a pH measured according to DIN ISO 10390 of 5 to 6.5. In another, component B has a specific BET surface area determined by nitrogen adsorption according to ISO 9277 of 2.0 to 8.0 m²/g.

In another embodiment not yet disclosed, a lubricant and preferably a silicon lubricant is present in the composition as component C in an amount of 0.5 to 2 wt. %. In a different embodiment, the lubricant comprises 30 to 80 wt. % siloxane, preferably 40 to 70 wt. % siloxane. In another different embodiment, component C is not a coating of any other component, but rather a separate component within the composition.

In a different embodiment, the composition further comprises component D, a rubber modified graft polymer, present in the composition in an amount greater than 0 to 20 wt. %, or 5 to 15 wt. %, preferably 7 to 11 wt. %. In another, component D is at least one graft polymer of D.1: 5 to 95 % by weight of at least one vinyl monomer on D.2: 5 to 95 % by weight of a one or more elastomeric graft bases with glass transition temperatures below -10°C, wherein the glass transition temperature is determined by means of differential scanning calorimetry according to standard DIN EN 61006 at a heating rate of 10 K/min. with definition of the glass transition temperature as the mid-point temperature. In yet another embodiment, component D.1 is selected from the group consisting of styrene, α-methylstyrene and methyl methacrylate, acrylonitrile and maleic anhydride. In still another, component D has a core-shell structure and component D.2 is selected from the group consisting of diene rubbers, acrylate rubber and silicone/ acrylate composite rubbers.

In yet another embodiment, the composition further comprises component E, a vinyl copolymer, present in the composition in an amount greater than 0 to 40 wt. %. In still another, component E is present in the composition in an amount of 5 to 35 wt. %, preferably 10 to 30 wt. %, most preferably 17 to 26 wt. %. In a different embodiment, the vinyl copolymer is styrene acrylonitrile. In another different embodiment, the composition further comprises at least one member selected from the group consisting of lubricant, mold release agents, nucleating agent, antistatic agent, thermal stabilizer, light stabilizer, hydrolytic stabilizer, filler, reinforcing agent, colorant, pigment, flame retarding agent and drip suppressant. In another, the composition does not comprise glass fibers. In yet another, the composition does not comprise polymerized polysiloxane.

### Detailed Description of the Invention

The inventive thermoplastic composition comprises
(A) 40 to 95 wt. %, preferably 58 to 80 wt. %, more preferably 64 to 73 wt. % of an aromatic (co)poly(ester)-carbonate,
(B) greater than 0 wt.% to 10 wt. %, preferably 2 to 6 wt. % of a mineral filler comprising quartz or silica,
(C) greater than 0 wt.% to 5 wt. %, preferably 1 to 2 wt. % of a siloxane lubricant,
(D) optionally, greater than 0 to 20 wt. %, preferably 5 to 15 wt. %, more preferably 7 to 11 wt. % of a rubber modified graft polymer, and
(E) optionally, greater than 0 to 40 wt. %, preferably 5 to 35 wt. %, more preferably 10 to 30 wt. %, most preferably 17 to 26 wt. % of a vinyl copolymer.

### (A) Aromatic (Co)poly(ester)carbonate

The term aromatic (co)poly(ester)carbonates, refers to homopolycarbonates, copolycarbonates, including polyestercarbonates. These materials are well known and are available in commerce. (Co)poly(ester)carbonates may be prepared by known processes including melt transesterification process and interfacial polycondensation process (see for instance Schnell's "Chemistry and Physics of Polycarbonates", Interscience Publishers, 1964) and are widely available in commerce, for instance under the trademark Makrolon^{®} from Covestro LLC, Pittsburgh, Pennsylvania.

Aromatic dihydroxy compounds suitable for the preparation of aromatic (co)poly(ester)carbonates (herein referred to as polycarbonates) conform to formula (I) 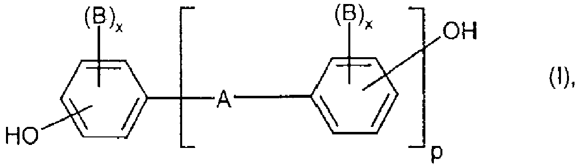 wherein
- A: represents a single bond, C₁- to C₅-alkylene, C₂- to C₅-alkylidene, C₅- to C₆-cycloalkylidene, -O-, -SO-, -CO-, -S-, -SO₂-, C₆- to C₁₂-arylene, to which there may be condensed other aromatic rings optionally containing hetero atoms, or a radical conforming to formula (II) or (III)

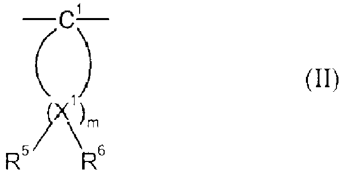

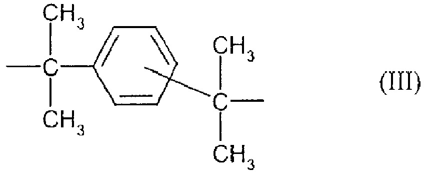

The substituents B independently one of the others denote C₁- to C₁₂-alkyl, preferably methyl, x independently one of the others denote 0, 1 or 2, p represents 1 or 0, and R⁵ and R⁶ are selected individually for each X¹ and each independently of the other denote hydrogen or C₁- to C₆-alkyl, preferably hydrogen, methyl or ethyl, X¹ represents carbon, and m represents an integer of 4 to 7, preferably 4 or 5, with the proviso that on at least one atom X¹, R⁵ and R⁶ are both alkyl groups.

Preferred aromatic dihydroxy compounds are hydroquinone, resorcinol, dihydroxydiphenols, bis-(hydroxyphenyl)-C₁-C₅-alkanes, bis-(hydroxyphenyl)-C₅-C₆-cycloalkanes, bis-(hydroxyphenyl) ethers, bis-(hydroxyphenyl) sulfoxides, bis-(hydroxyphenyl) ketones, bis-(hydroxyphenyl)-sulfones and α,α-bis-(hydroxyphenyl)-diisopropyl-benzenes. Particularly preferred aromatic dihydroxy compounds are 4,4'-dihydroxydiphenyl, bisphenol A, 2,4-bis-(4-hydroxyphenyl)-2-methylbutane, 1,1-bis-(4-hydroxyphenyl)-cyclohexane, 1,1-bis-(4-hydroxyphenyl)-3,3,5-trimethylcyclohexane, 4,4'-dihydroxydiphenyl sulfide, 4,4'-dihydroxydiphenyl-sulfone. Special preference is given to 2,2-bis-(4-hydroxyphenyl)-propane (bisphenol A). These compounds may be used singly or as mixtures containing two or more aromatic dihydroxy compounds.

Chain terminators suitable for the preparation of polycarbonates include phenol, p-chlorophenol, p-tert.-butylphenol, as well as long-chained alkylphenols, such as 4-(1,3-tetramethylbutyl)-phenol or monoalkylphenols or dialkylphenols having a total of from 8 to 20 carbon atoms in the alkyl substituents, such as 3,5-di-tert.-butylphenol, p-isooctylphenol, p-tert.-octylphenol, p-dodecylphenol and 2-(3,5-dimethylheptyl)-phenol and 4-(3,5-dimethylheptyl)-phenol. The amount of chain terminators to be used is generally 0.5 to 10% based on the total molar amount of the aromatic dihydroxy compounds used. Polycarbonates may be branched in a known manner, preferably by the incorporation of 0.05 to 2.0%, based on the molar amount of the aromatic dihydroxy compounds used, of compounds having a functionality of three or more, for example compounds having three or more phenolic groups. Aromatic polyestercarbonates are known. Suitable such resins are disclosed in U.S. Patents 4,334,053: 6,566,428 and in CA1173998, all incorporated herein by reference.

Aromatic dicarboxylic acid dihalides for the preparation of aromatic polyester carbonates include diacid dichlorides of isophthalic acid, terephthalic acid, diphenyl ether 4,4'-dicarboxylic acid and naphthalene-2,6-dicarboxylic acid. Particularly preferred are mixtures of diacid dichlorides of isophthalic acid and terephthalic acid in a ratio of from 1:20 to 20:1. Branching agents may also be used in the preparation of suitable polyestercarbonates, for example, carboxylic acid chlorides having a functionality of three or more, such as trimesic acid trichloride, cyanuric acid trichloride, 3,3'-,4,4'-benzophenone-tetracarboxylic acid tetrachloride, 1,4,5,8-naphthalenetetracarboxylic acid tetrachloride or pyromellitic acid tetrachloride, in amounts of 0.01 to 1.0 mol.% (based on dicarboxylic acid dichlorides used), or phenols having a functionality of three or more, such as phloroglucinol, 4,6-dimethyl-2,4,6-tri-(4-hydroxyphenyl)-heptene-2, 4,4-dimethyl-2,4,6-tri-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenylmethane, 2,2-bis[4,4-bis(4-hydroxyphenyl)-cyclohexyl]-propane, 2,4-bis(4-hydroxyphenyl-isopropyl)-phenol, tetra-(4-hydroxyphenyl)-methane, 2,6-bis(2-hydroxy-5-methyl-benzyl)-4-methylphenol, 2-(4-hydroxyphenyl)-2-(2,4-dihydroxyphenyl)-propane, tetra-(4-[4-hydroxyphenyl-isopropyl]-phenoxy)-methane, 1,4-bis[4,4'-dihydroxy-triphenyl)-methyl]-benzene, in amounts of from 0.01 to 1.0 mol.%, based on diphenols used. Phenolic branching agents can be placed in the reaction vessel with the diphenols, acid chloride branching agents may be introduced together with the acid dichlorides.

The content of carbonate structural units in the thermoplastic aromatic polyester carbonates may be up to 99 mol.%, especially up to 80 mol.%, particularly preferably up to 50 mol.%, based on the sum of ester groups and carbonate groups. Both the esters and the carbonates contained in the aromatic polyester carbonates may be present in the polycondensation product in the form of blocks or in a randomly distributed manner.

In a preferred embodiment, component A does not comprise any polymerized polysiloxane. In another preferred embodiment, the thermoplastic molding composition of the present invention does not comprise any polymerized polysiloxane.

The preferred thermoplastic aromatic polycarbonates have weight-average molecular weights (measured by gel permeation chromatography) of at least 25,000. Preferably these have maximum weight-average molecular weight of 80,000, more preferably up to 70,000, particularly preferably up to 50,000 g/mol. In an embodiment, Component A may be a linear polycarbonate based on bisphenol A, sold under the Makrolon brand by Covestro LLC, Pittsburgh, Pennsylvania.

Component A may be present in the thermoplastic composition in an amount of 40 to 95 wt. %, preferably 58 to 80 wt. %, more preferably 64 to 73 wt. % of the thermoplastic composition.

### (B) Mineral Filler

Component (B) is an inorganic filler which is made up to an extent of over 98% by weight of silicon dioxide (quartz). Component B is preferably finely divided fused silica flours produced from electrically molten silicon dioxide by iron-free grinding with subsequent wind sifting.

Particularly preferred fused silica is characterized in that the content of metal oxides does not exceed 2% by weight, preferably 1.5% by weight, particularly preferably 1% by weight, wherein preferably the content of Al₂O₃ is ≤1% by weight, preferably ≤0.6% by weight, particularly preferably ≤0.3% by weight, Fe₂O₃ is ≤0.1% by weight, preferably ≤0.06% by weight, particularly preferably ≤0.03% by weight, CaO+MgO is ≤0.1 % by weight, preferably ≤0.06% by weight, particularly preferably ≤0.03% by weight and Na₂O+K₂O is ≤0.1% by weight, preferably ≤0.06% by weight, particularly preferably ≤0.03% by weight in each case based on the total weight of the fused silica flour.

In a particular embodiment the fused silica is characterized in that the content of Al₂O₃ is 0.01% to 1% by weight, preferably 0.05% to 0.6% by weight, particularly preferably 0.1% to 0.3% by weight.

In a particular embodiment the fused silica is characterized in that the content of Fe₂O₃ is 0.001% to 0.1 % by weight, preferably 0.005% to 0.06% by weight, particularly preferably 0.01% to 0.03% by weight.

In a particular embodiment the fused silica is characterized in that the content of CaO+MgO is 0.001% to 0.1% by weight, preferably 0.005% to 0.06% by weight, particularly preferably 0.01% to 0.03% by weight.

In a particular embodiment the fused silica is characterized in that the content of Na₂O+K₂O is 0.001% to 0.1% by weight, preferably 0.005% to 0.06% by weight, particularly preferably 0.01% to 0.03% by weight.

It is advantageous and thus preferable to especially employ the fused silica flour according to the invention having an average particle size d₅₀ of 1.0 to 10.0 µm, preferably 2.0 to 6.0 µm and particularly preferably of 3.0 to 5.0 µm.

The average particle size d₅₀ is the diameter with 50% by weight of the particles above it and 50% by weight of the particles below it. It can be determined by ultracentrifugation (W. Scholtan, H. Lange, Kolloid, Z. and Z. Polymere [polymers] 250 (1972), 782-1796). The fused silica to be used according to the invention preferably has an upper particle/grain size d90 below 100 µm, preferably below 50 µm, particularly preferably below 20 µm and especially preferably below 15 µm. The upper particle/grain size d₉₀ describes the size which 90% of the particles/grains do not exceed.

The fused silica flour preferably has a specific BET surface area determined by nitrogen adsorption according to ISO 9277 (2010 version) of 0.6 to 10.0 m²/g, more preferably of 2.0 to 8.0 m²/g and particularly preferably of 5.0 to 7.0 m²/g.

Especially preferred are those fused silica flours having a pH, measured according to ISO 10390 (2005 version) in aqueous suspension in the range from 5.0 to 8.0, preferably 5.5 to 7.0. They further have an oil absorption number according to ISO 787-5 (1995 version) of preferably 20 to 30 g/100 g.

An example of Component B is a fused silica flour (silicon dioxide) having an average particle size of d₅₀=4.0 µm (unsized), a total content of metal oxides of <1% by weight and a content of Al₂O₃ of 0.3 wt %. In aqueous dispersion the fused silica has a pH of 6 measured according to ISO 10390. The fused silica flour has a specific BET surface area determined by nitrogen adsorption according to ISO 9277 (2010 version) of 6.0 m2/g. Another example of Component B is a spherical silica having an average particle size of under 0.3 µm. In an embodiment, spherical silica is a white quartz powder, having an average particle size of d₅₀=0.285 µm. The total content of metal oxides of <1% by weight. In aqueous dispersion the fused silica has a pH of 4.25 measured according to ISO 10390. In a preferred embodiment, the average particle size is less than one micron.

Component B is present in the thermoplastic composition in an amount of greater than 0 wt.% to 10 wt. %, preferably 2 - 6 wt. %.

### (C) Siloxane Lubricant

Component (C) is a siloxane-based lubricant, a siloxane polymer that improves internal lubrication and that also helps to bolster the wear and friction properties of the composition encountering another surface. Any of a variety of siloxane polymers may generally be employed. The siloxane polymer may, for instance, encompass any polymer, co-polymer or oligomer that includes siloxane units in the backbone having the formula:

RᵣSiO_{(4-r/2)}

wherein
R is independently hydrogen or substituted or unsubstituted hydrocarbon radicals, and
r is 0, 1, 2 or 3.

Some examples of suitable radicals R include, for instance, alkyl, aryl, alkylaryl, alkenyl or alkynyl, or cycloalkyl groups, optionally substituted, and which may be interrupted by heteroatoms, i.e., may contain heteroatom(s) in the carbon chains or rings. Suitable alkyl radicals, may include, for instance, methyl, ethyl, n-propyl, isopropyl, n-butyl, isobutyl, tert-butyl, n-pentyl, isopentyl, neopentyl and tert-pentyl radicals, hexyl radicals (e.g., n-hexyl), heptyl radicals (e.g., n-heptyl), octyl radicals (e.g., n-octyl), isooctyl radicals (e.g., 2,2,4-trimethylpentyl radical), nonyl radicals (e.g., n-nonyl), decyl radicals (e.g., n-decyl), dodecyl radicals (e.g., n-dodecyl), octadecyl radicals (e.g., n-octadecyl), and so forth. Likewise, suitable cycloalkyl radicals may include cyclopentyl, cyclohexyl cycloheptyl radicals, methylcyclohexyl radicals, and so forth; suitable aryl radicals may include phenyl, biphenyl, naphthyl, anthryl, and phenanthryl radicals; suitable alkylaryl radicals may include o-, m- or p-tolyl radicals, xylyl radicals, ethylphenyl radicals, and so forth; and suitable alkenyl or alkynyl radicals may include vinyl, 1-propenyl, 1-butenyl, 1-pentenyl, 5-hexenyl, butadienyl, hexadienyl, cyclopentenyl, cyclopentadienyl, cyclohexenyl, ethynyl, propargyl 1-propynyl, and so forth. Examples of substituted hydrocarbon radicals are halogenated alkyl radicals (e.g., 3-chloropropyl, 3,3,3-trifluoropropyl, and perfluorohexylethyl) and halogenated aryl radicals (e.g., p-chlorophenyl and p-chlorobenzyl). In one particular embodiment, the siloxane polymer includes alkyl radicals (e.g., methyl radicals) bonded to at least 70 mol % of the Si atoms and optionally vinyl and/or phenyl radicals bonded to from 0.001 to 30 mol % of the Si atoms. The siloxane polymer is also preferably composed predominantly of diorganosiloxane units. The end groups of the polyorganosiloxanes may be trialkylsiloxy groups, in particular the trimethylsiloxy radical or the dimethylvinylsiloxy radical. However, it is also possible for one or more of these alkyl groups to have been replaced by hydroxy groups or alkoxy groups, such as methoxy or ethoxy radicals. Particularly suitable examples of the siloxane polymer include, for instance, dimethylpolysiloxane, phenylmethylpolysiloxane, vinylmethylpolysiloxane, and trifluoropropylpolysiloxane.

The siloxane polymer may also include a reactive functionality on at least a portion of the siloxane monomer units of the polymer, such as one or more of vinyl groups, hydroxyl groups, hydrides, isocyanate groups, epoxy groups, acid groups, halogen atoms, alkoxy groups (e.g., methoxy, ethoxy and propoxy), acyloxy groups (e.g., acetoxy and octanoyloxy), ketoximate groups (e.g., dimethylketoxime, methylketoxime and methylethylketoxime), amino groups(e.g., dimethylamino, diethylamino and butylamino), amido groups (e.g., N-methylacetamide and N-ethylacetamide), acid amido groups, amino-oxy groups, mercapto groups, alkenyloxy groups (e.g., vinyloxy, isopropenyloxy, and 1-ethyl-2-methylvinyloxy), alkoxyalkoxy groups (e.g., methoxyethoxy, ethoxyethoxy and methoxypropoxy), aminoxy groups (e.g., dimethylaminoxy and diethylaminoxy), mercapto groups, etc.

Regardless of its particular structure, the siloxane polymer typically has a relatively high molecular weight, which reduces the likelihood that it migrates or diffuses to the surface of the polymer composition and thus further minimizes the likelihood of phase separation. For instance, the siloxane polymer typically has a weight average molecular weight of about 100,000 grams per mole or more, in some embodiments about 200,000 grams per mole or more, and in some embodiments, from about 500,000 grams per mole to about 2,000,000 grams per mole. The siloxane polymer may also have a relative high kinematic viscosity, such as about 10,000 centistokes or more, in some embodiments about 30,000 centistokes or more, and in some embodiments, from about 50,000 to about 500,000 centistokes.

If desired, silica particles (e.g., fumed silica) may also be employed in combination with the siloxane polymer to help improve its ability to be dispersed within the composition. Such silica particles may, for instance, have a particle size of from about 5 nanometers to about 50 nanometers, a surface area of from about 50 square meters per gram (m²/g) to about 600 m²/g, and/or a density of from about 160 kilogram per cubic meter (kg/m³) to about 190 kg/m³. When employed, the silica particles typically constitute from about 1 to about 100 parts, and in some some embodiments, from about 20 to about 60 parts by weight based on 100 parts by weight of the siloxane polymer. In one embodiment, the silica particles can be combined with the siloxane polymer prior to addition of this mixture to the polymer composition. For instance a mixture including an ultrahigh molecular weight polydimethylsiloxane and fumed silica can be incorporated in the polymer composition.

In a preferred embodiment, the siloxane of Component C is not polymerized with the polycarbonate of Component A. In another preferred embodiment, component C is not a coating of any other component, but rather a separate component within the composition, which can be mixed about within the composition, independent of any other component in the composition.

Component C may be present in the thermoplastic composition in an amount of greater than 0 to 5 wt. %, preferably 0.5 to 2 wt. % of the thermoplastic composition.

### (D) Rubber-Modified Graft Polymer

The compositions comprise as component D a rubber-modified graft polymer or a mixture of rubber- modified graft polymers.

Rubber-modified graft polymers D comprise:
D.1) 5% to 95% by weight, preferably 10% to 70% by weight, more preferably 20% to 60% by weight, based on component D.1, of a mixture of
   D.1.1) 65% to 85% by weight, preferably 70% to 80% by weight, based on D.1, of at least one monomer selected from the group of the vinylaromatics (for example styrene, α-methylstyrene), ring-substituted vinylaromatics (for example p-methylstyrene, p-chlorostyrene) and (C1-C8)-alkyl methacrylates (for example methyl methacrylate, ethyl methacrylate), and
   D.1.2) 15% to 35% by weight, preferably 20% to 30% by weight, based on D.1.1, of at least one monomer selected from the group of the vinyl cyanides (for example unsaturated nitriles such as acrylonitrile and methacrylonitrile), (C1-C8)-alkyl (meth)acrylates (for example methyl methacrylate, n-butyl acrylate, tert-butyl acrylate) and derivatives (for example anhydrides and imides) of unsaturated carboxylic acids (for example maleic anhydride and N-phenylmaleimide), and
D.2) 95% to 5% by weight, preferably 90% to 30% by weight, more preferably 80% to 40% by weight, based on component D.1, of at least one elastomeric acrylate rubber graft base.

The graft base preferably has a glass transition temperature < 0°C, further preferably < -20°C, more preferably < -40°C.

Unless expressly stated otherwise in the present application, the glass transition temperature is determined for all components by differential scanning calorimetry (DSC) according to DIN EN 61006 (1994 version) at a heating rate of 10 K/min with determination of Tg as the midpoint temperature (tangent method).

The graft particles in component D preferably have a median particle size (d₅₀) of 0.05 to 5 µm, preferably of 0.1 to 1.0 µm, more preferably of 0.2 to 0.5 µm.

The median particle size d₅₀ is the diameter above and below which 50% by weight of the particles respectively lie. Unless expressly stated otherwise in the present application, it is determined by means of ultracentrifuge measurement (W. Scholtan, H. Lange, Kolloid, Z. und Z. Polymere 250 (1972), 782-I796).

Preferred monomers D.1.1 are selected from at least one of the monomers styrene, α-methylstyrene and methyl methacrylate; preferred monomers D.1.2 are selected from at least one of the monomers acrylonitrile, maleic anhydride and methyl methacrylate.

Particularly preferred monomers are D.1.1 styrene and D.1.2 methyl methacrylate.

Elastomeric acrylate rubber graft bases D.2 suitable for the graft polymers D are preferably polymers of alkyl acrylates, optionally with up to 40% by weight, based on D.2, of other polymerizable, ethylenically unsaturated monomers. The preferred polymerizable acrylic esters include C1 to C8-alkyl esters, for example methyl, ethyl, butyl, n-octyl and 2-ethylhexyl esters; haloalkyl esters, preferably halo-C1-C8-alkyl esters, such as chloroethyl acrylate, and also mixtures of these monomers.

Monomers having more than one polymerizable double bond can be copolymerized for crosslinking purposes. Preferred examples of crosslinking monomers are esters of unsaturated monocarboxylic acids having 3 to 8 carbon atoms and unsaturated monohydric alcohols having 3 to 12 carbon atoms, or of saturated polyols having 2 to 4 OH groups and 2 to 20 carbon atoms, such as ethylene glycol dimethacrylate, allyl methacrylate; polyunsaturated heterocyclic compounds, such as trivinyl and triallyl cyanurate; polyfunctional vinyl compounds, such as di- and trivinylbenzenes; but also triallyl phosphate and diallyl phthalate. Preferred crosslinking monomers are allyl methacrylate, ethylene glycol dimethacrylate, diallyl phthalate and heterocyclic compounds which have at least three ethylenically unsaturated groups. Particularly preferred crosslinking monomers are the cyclic monomers triallyl cyanurate, triallyl isocyanurate, triacryloylhexahydro-s-triazine, triallylbenzenes. The amount of the crosslinked monomers is preferably 0.02% to 5%, especially 0.05% to 2%, by weight, based on the graft base D.2. In the case of cyclic crosslinking monomers having at least three ethylenically unsaturated groups, it is advantageous to limit the amount to below 1% by weight of the graft base D.2.

The gel content of the graft polymers is at least 40% by weight, preferably at least 60% by weight, more preferably at least 75% by weight (measured in acetone).

The gel content of the graft polymers, unless otherwise stated in the present invention, is determined at 25°C as the insoluble fraction in acetone as the solvent (M. Hoffmann, H. Krömer, R. Kuhn, Polymeranalytik I und II [Polymer Analysis I and II], Georg Thieme-Verlag, Stuttgart 1977).

The graft polymers D are generally prepared by free-radical polymerization. Particularly preferred polymers D are, for example, those polymers prepared by emulsion polymerization as described, for example, in Ullmann, Enzyklopädie der Technischen Chemie [Ullmann's Encyclopedia of Industrial Chemistry], vol. 19 (1980), p. 280 et seq.

On conclusion of the polymerization reaction, the graft polymers are precipitated out of the aqueous phase, followed by an optional wash with water. The last workup step is a drying step.

The graft polymers D comprise additives and/or processing auxiliaries optionally present for preparation processes, for example emulsifiers, precipitants, stabilizers and reaction initiators which are not completely removed in the above-described workup. These may be Brønsted-basic or Brønsted-acidic in nature.

As a result of the preparation, graft polymer D generally also contains free copolymer of D.1.1 and D.1.2, i.e. copolymer not chemically bonded to the rubber base, which is notable in that it can be dissolved in suitable solvents (e.g. acetone).

Preferably, component D contains a free copolymer of D.1.1 and D.1.2 which has a weight-average molecular weight (Mw), determined by gel permeation chromatography with polystyrene as standard, of preferably 30 000 to 150 000 g/mol, more preferably 40 000 to 120 000 g/mol.

Component D may be present in the thermoplastic composition in an amount of greater than 0 to 20 wt. %, preferably 5 to 15 wt. %, more preferably 7 to 11 wt. % of the thermoplastic composition.

### (E) Vinyl Copolymer

Optionally, the thermoplastic composition may include component E, a vinyl (co)polymer. Suitable as the vinyl (co)polymers include polymers of at least one monomer selected from the group of the vinyl aromatic compounds, vinyl cyanides (unsaturated nitriles), (meth)acrylic acid (C₁-C₈)-alkyl esters, unsaturated carboxylic acids as well as derivatives (such as anhydrides and imides) of unsaturated carboxylic acids. Particularly suitable are (co)polymers of:
E.1 from 50 to 99 parts by weight, preferably from 60 to 80 parts by weight, in particular from 72 to 78 parts by weight (based on component E) of vinyl aromatic compounds and/or vinyl aromatic compounds substituted on the ring, such as styrene, α-methylstyrene, p-methylstyrene, p-chlorostyrene, and/or (meth)acrylic acid (C₁-C₈)-alkyl esters, such as methyl methacrylate, ethyl methacrylate, and
E.2 from 1 to 50 parts by weight, preferably from 20 to 40 parts by weight, in particular from 22 to 28 parts by weight (based on component E) of vinyl cyanides (unsaturated nitriles), such as acrylonitrile and methacrylonitrile, and/or (meth)acrylic acid (C₁-C₈)-alkyl esters, such as methyl methacrylate, n-butyl acrylate, tert-butyl acrylate, and/or unsaturated carboxylic acids, such as maleic acid, and/or derivatives, such as anhydrides and imides, of unsaturated carboxylic acids, for example maleic anhydride and N-phenylmaleimide.

The vinyl (co)polymers E are generally resin-like, thermoplastic and rubber-free. A preferred vinyl copolymer E is also a copolymer of E.1 styrene and E.2 acrylonitrile.

The (co)polymers according to E are known and can be prepared, for example, by radical polymerization, in particular by emulsion, suspension, solution or mass polymerization. The (co)polymers preferably have mean molecular weights Mw of from 15,000 to 200,000.

Factors in choosing component E for use with the thermoplastic composition is (1) improvement in flow performance of the resulting thermoplastic composition, and (2) its miscibility, and its compatibility with the other components of the thermoplastic composition. Component E may be present in the thermoplastic composition in an amount of greater than 0 to 40 wt. %, preferably 5 to 35 wt. %, more preferably 10 to 30 wt. %, most preferably 17 to 26 wt. % of the thermoplastic composition.

The inventive composition may further include additives that are known for their function in the context of thermoplastic compositions that contain poly(ester)carbonates. These include any one or more of lubricants, mold release agents, for example pentaerythritol tetrastearate, nucleating agents, antistatic agents, thermal stabilizers, light stabilizers, hydrolytic stabilizers, fillers and reinforcing agents, colorants or pigments, flame retarding agents and drip suppressants.

All percentages listed herein are wt. %, based on the total weight of the thermoplastic composition, unless otherwise indicated.
The inventive composition may be used to produce moldings of any kind by thermoplastic processes such as injection molding, extrusion and blow molding methods.

The Examples which follow illustrate the invention.

### EXAMPLES

In preparing the exemplified compositions that are described below the following materials were used:
A - a linear polycarbonate based on bisphenol A having a weight-average molecular weight MW of 25,000 g/mol (determined by GPC).
B1 a fused silica filler (silicon dioxide) with grain size of about 4 microns that is produced from electrically fused SiO₂ by iron-free grinding with subsequent air separation.
B2 - a spherical silica with grain size about 0.3 microns that is produced by silica being belted in very high temperature flame.
C1 - a siloxane lubricant, with content of high molecular weight siloxane about 70%
C2 -a siloxane lubricant, with content of high molecular weight siloxane about 50% dispersed in a thermoplastic resin.
D - an acrylic core-shell impact copolymer modifier based on a methylmethacrylate shell that is grafted to a butyl-acrylate type of copolymer core with a particle size between 100 - 300 microns
E - a mass styrene acrylonitrile (SAN) copolymer with about 23% acrylonitrile.
Other additives - thermal stabilizer, UV stabilizer, mold release agent, and colorants

All the components in Tables 1-3 below are in wt. % unless otherwise indicated, combined with the amounts of various additives, add up to 100 wt. % for each composition. Compositions were produced using a twin-screw melt compounding process, wherein each of the components and additives were melt-compounded. Pellets obtained from the process were dried in a forced-air convection oven at 90°C for 4 to 6 hours. Test specimens were conventionally molded from preparations of the compositions, which were then measured for several properties, including melt volume rate, Izod notched impact energy/ break type, tensile modulus, tensile strength, and elongation at break. The melt volume rates (MVR) of the compositions were determined in accordance with ISO 1133 at 260°C, 5 kg load.

Tensile modulus, elongation at break, elongation at yield, strength at break and yield were measured in accordance with ISO 527 at 23°C, using 10 reps of ISO 0.158" dumb-bell specimen; type 1A. Tensile modulus was measured using an extensometer at a lower speed to ensure 1% of the gauge length per minute in adherence to the test method. The notched impact strength was determined at room temperature based on ISO180/A using 0.158" thick specimen. The failure mode was determined by visual observation and recorded as "partial" for 100% ductile performance, and "complete" for brittle failure.

Gloss levels were measured at 20, 60 and 85° at 23°C using a conventional portable BYK-Gardner Micro-Tri- glossmeter calibrated with a black glass standard according to ISO 2813. Average gloss of three measurements is reported as a percentage gloss for each sample. It has been shown that the 20°, 60° and 85° gloss measurements offer numerical values that are roughly linearly related over the range of values to the perceived gloss of high-gloss, medium-gloss, and low-gloss surfaces, respectively. The 60° geometry was chosen because it is traditionally used for plastic components in the automotive industry, since it is considered to provide the best correlation to visual appearance.

Samples from each formulation were also tested for scratch and mar resistance, and tests following simulations of a car wash. For scratch resistance, initial color readings were taken, specular component excluded. The tests were done in accordance with GMW14688-A. The specimen was mounted in the Erichsen Model 430. The load was set to 10N with a scratch speed of 1000mm/minute. The specimen was then scratched 20 times. The scratches were unidirectional, parallel to each other, and 2mm apart using a 1mm diameter scratch head. The specimen was then rotated 90° and the same scratch pattern was repeated. After scratching, final color readings were taken. DL* refers to difference of luminance between unscratched and scratched areas via spectrophotometry. The resulting visual and instrumental AATCC values refer to color and appearance of the surfaces, with 5 being flawless, and 1 being extremely poor appearance.

For mar resistance, initial gloss readings were taken. Change in gloss was reported as Delta G (60°), referring to the angle of measurement geometry according to ISO 2813. The specimen was mounted in the Erichsen Model 430. A stainless steel marring disc with a diameter of 16mm, with a rounded polished boarder of 1mm in diameter was used as the scratch head. The load was set to 7N, with a scratch speed of 1000mm/minute. The specimen was then scratched 80 times, 0.5mm apart. The alignment of the tool was transverse to the travel direction and the mar direction was unidirectional. The specimen was then rotated 90° and the same scratch pattern was repeated. After scratching final gloss and color readings were taken. The change in gloss readings were recorded as Delta G in Tables 4-6 below.

For the car wash simulations, initial gloss readings were taken. Specimens were placed in the test apparatus, and washed for 5 minutes, according to GMW17103. After the test specimens were visually examined for scratching and other detrimental effects. Final gloss readings were taken within 4 hours of the completion of the test. Then, the % change was recorded to determine the amount the gloss changes as a result of the washing.

The formulations are summarized below in Tables 1-2, and the results in Tables 3-4.

**Table 1**

| component | Comp. Example 1 | Inventive Example 2 | Inventive Example 3 | Inventive Example 4 | Inventive Example 5 | Inventive Example 6 | Inventive Example 7 | Inventive Example 8 | Inventive Example 9 |
|---|---|---|---|---|---|---|---|---|---|
| A | 73.28 | 70.12 | 67.68 | 70.12 | 69.32 | 67.7 | 70.12 | 69.32 | 67.68 |
| B1 | 0 | 1.99 | 4.97 | 0 | 0 | 0 | 1.99 | 2.98 | 4.97 |
| B2 | 0 | 0 | 0 | 1.99 | 2.98 | 4.97 | 0 | 0 | 0 |
| C1 | 0 | 0 | 0 | 0 | 0 | 0 | 1.99 | 1.99 | 1.99 |
| C2 | 0 | 1.99 | 1.99 | 1.99 | 1.99 | 1.99 | 0 | 0 | 0 |
| D | 8.8 | 8.62 | 8.61 | 8.62 | 8.6 | 8.61 | 8.62 | 8.61 | 8.6 |
| E | 15.61 | 14.94 | 14.41 | 14.94 | 14.76 | 14.42 | 14.94 | 14.76 | 14.41 |
| other additives | 2.35 | 2.35 | 2.35 | 2.35 | 2.35 | 2.35 | 2.35 | 2.35 | 2.35 |

**Table 2**

| component | Comp. Example 10 | Comp. Example 11 | Comp. Example 12 | Comp. Example 13 | Comp. Example 14 | Comp. Example 15 |
|---|---|---|---|---|---|---|
| A | 69.16 | 65.08 | 69.16 | 65.08 | 71.76 | 71.76 |
| B1 | 4.97 | 9.94 | | | | |
| B2 | | | 4.97 | 9.94 | | |
| C1 | | | | | | 1.99 |
| C2 | | | | | 1.99 | |
| D | 8.8 | 8.8 | 8.8 | 8.8 | 8.62 | 8.62 |
| E | 14.73 | 13.86 | 14.73 | 13.86 | 15.29 | 15.29 |
| other additives | 2.35 | 2.35 | 2.35 | 2.35 | 2.35 | 2.35 |

**Table 3**

| | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Scratch | DL* | 1.66 | -0.04 | 0.13 | 0.27 | 0.29 | 0.11 | 0.12 | -0.05 | 0.04 |
| Scratch | Visual AATCC | 4 | 5 | 5 | 5 | 5 | 5 | 5 | 5 | 5 |
| Scratch | Instrumental AATCC | 4 | 5 | 5 | 5 | 5 | 5 | 5 | 5 | 5 |
| Mar | Initial Gloss (60°) | 98.5 | 95.5 | 89.5 | 98.7 | 97.7 | 97.5 | 95.6 | 93.4 | 92.1 |
| Mar | Final Gloss (60°) | 86.8 | 94.5 | 88 | 99.3 | 96 | 96.9 | 94.7 | 92.6 | 89.2 |
| Mar | Delta G (60°) | -11.7 | -1 | -1.5 | 0.6 | -1.7 | -0.6 | -0.9 | -0.8 | -2.9 |
| Car Wash | Gloss Change % (20°) | -98 | -91 | -79 | -26 | -65 | -94 | -72 | -96 | -47 |
| Car Wash | Gloss Change % (60°) | -82 | -67 | -48 | -16 | -38 | -71 | 44 | -78 | -25 |
| Car Wash | Gloss Change % (85°) | -23 | -16 | -20 | 2 | -15 | -21 | -7 | -23 | -11 |
| Scratch Depth, microns | um | 8.6 ± 3.0 | 7.5 ± 1.2 | 7.0 ± 1.1 | 11.1 ± 1.3 | 10.4 ± 0.7 | 12.1 ± 1.5 | NA | 9.5 ± 1.0 | 8.7 ± 1.6 |
| Izod notched impact Energy | kJ/m² | 69.4 | 17.3 | 16.3 | 49.9 | 75.8 | 60.9 | 25.1 | 23.9 | 17.3 |
| Break Ductility | - | 100% Ductile | 60% Ductile, 40% Brittle | 30% Ductile, 70% Brittle | 100% Ductile | 100% Ductile | 100% Ductile | 100% Ductile | 80% Ductile, 20% Brittle | 20% Ductile, 80% Brittle |
| Tensile Modulus | MPa | 2304 | 2471 | 2502 | 2580 | 2395 | 2420 | 2583 | 2301 | 2367 |
| Tensile Strength | MPa | 62.58 | 60.24 | 56.94 | 59.88 | 57.69 | 55.55 | 58.36 | 54.99 | 53.4 |
| Elongation at Break | % | 79 | 90 | 83 | 95 | 85 | 83 | 98 | 96 | 83 |

**Table 4**

| | | Ex. 10 | Ex. 11 | Ex. 12 | Ex. 13 | Ex. 14 | Ex. 15 |
|---|---|---|---|---|---|---|---|
| Scratch | DL* | 2.26 | 0.86 | 2.08 | 1.22 | -0.03 | 1.27 |
| Scratch | Visual AATCC | 4-5 | 4-5 | 3-4 | 4 | 5 | 4 |
| Scratch | Instrumental AATCC | 4-5 | 4-5 | 3-4 | 4 | 5 | 4 |
| Mar | Initial Gloss (60°) | 81 | 69 | 99 | 98 | 100 | 100 |
| Mar | Final Gloss (60°) | 77 | 67 | 95 | 98 | 96 | 95 |
| Mar | Delta G (60°) | -4 | -2 | -4 | -1 | -4 | -6 |
| Car Wash | Gloss Change % (20°) | 67 | -52 | 88 | -74 | -87 | -87 |
| Car Wash | Gloss Change % (60°) | -39 | 31 | -65 | -50 | -67 | -54 |
| Car Wash | Gloss Change % (85°) | 9 | 8 | -25 | -13 | -24 | -9 |
| Scratch Depth, microns | um | 8.5 ± 1.2 | 7.5 ± 0.7 | NA | NA | 10.4 ± 0.3 | 9.0 ± 0.9 |
| Izod notched impact Energy | kJ/m² | 8.8 | 8.4 | 28.6 | 13.9 | 52.5 | 59.5 |
| Break Ductility | - | 100% Brittle | 100% Brittle | 50% Ductile, 50% Brittle | 100% Brittle | 100% Ductile | 100% Ductile |
| Tensile Modulus | MPa | 2742 | 2910 | 2658 | 2848 | 2564 | 2512 |
| Tensile Strength | MPa | 56.4 | 47.1 | 56.7 | 55.9 | 48.7 | 64.2 |
| Elongation at Break | % | 95 | 22 | 76 | 99 | 21 | 112 |

The performance of the material was analyzed based on the scratch resistance of the material and the mar resistance. Scratch resistance was measured by judging appearance of the scratches as well as change in luminance between unscratched and scratched areas, using the Erichsen test. Without any lubricant or mineral fillers, example 1 was found to perform poorly on the Erichsen scratch test, indicated by a high value of luminance between unscratched and scratched areas via spectrophotometry, DL values, as well as visible scratch pattern due to considerable stress whitening. Mar resistance was measured using delta gloss values, obtained from both the Erichsen test- part B and the Car wash simulation test. The abrasion/mar resistance of control sample 1, illustrated by a change in gloss value (Delta G (60°)), and the car wash test, are also not very good. With the addition of a combination of a functional filler and a lubricant (inventive example 2 and 4) the scratch resistance has been increased, which is illustrated by a significant decrease in luminance between unscratched and scratched areas via spectrophotometry, DL values, as well as significantly less visible scratch pattern. The mar resistance has been increased as well, which is illustrated by a significant decrease in gloss change (Delta G (60°)), between the initial and the final gloss readings. The presence of the functional filler reduces the scratch depth and the presence of the lubricant decreases the stress-whitening.

Inventive Examples 7 - 9 that are based on a siloxane lubricant, with content of high molecular weight siloxane about 70% illustrated a similar performance as examples 2 - 6: upon addition of a combination of a functional filler and a lubricant both the scratch resistance have been increased, which is illustrated by a significant decrease in DL values, as well as significantly less visible scratch pattern. The mar resistance for these formulations has been increased as well, which is illustrated by a significant decrease in gloss change (Delta G (60°). Similar to the examples 2 and 3, the presence of the functional filler with particle size around 4 micron decreased the toughness of the final blends.

Examples 10-13 each have a mineral filler, but no lubricant. These examples illustrated that the addition of only functional fillers without a lubricant makes the surface harder to scratch, which reflected low Delta G values, however the original gloss for the surface was decreased significantly (ex.10 and 11) if the filler has a particle size about 4 micron. Filler with a submicron size of 0.3 micron (ex. 12 and 13) allows for the achievement of a surface with a high initial gloss; however the mar properties are not very good, which is reflected in the car wash test gloss change values similar to Ex 1. Once the surface was scratched, the scratches became more visible, which was reflected by high DL values, seen in Ex. 10 and 12. When filler loading was increased from 5 to 10% (ex. 11 and 13), the DL value goes down, which reflects less visibility for scratches, however mechanical properties at the high loading of the fillers have been compromised, reflected by a 100% brittle performance of these blends.

Examples 14 and 15 each include lubricants, but not mineral fillers. These examples indicated that only lubricants without addition of the functional fillers can reduce the stress whitening and therefore hide the scratches, which reflected in a low DL value. However the surface becomes more susceptible to the scratches, and therefore more abrasive. This is reflected by a high value of Delta Gloss after a car wash test, indicating that the abrasion performance is not sufficient. The car wash tests also indicated that the surfaces for sample 14 and 15 were softer and more easily damaged. The results following the car wash tests indicated the surfaces would not endure for their intended use.

Compositions of the invention (examples 2-9) demonstrated better properties overall in comparison with those not of the invention (example 1, 10-15.). The results of the scratch test were universally a 5, where the comparative examples were 3-5, or less reliably good. Results from the Mar testing indicated very little change in gloss, at most 2.9°, while the comparative examples yielded higher changes, mostly 4-6°, or even higher.

Additionally, the inventive samples were each tested for mechanical properties that are needed for use in automotive exterior applications, including Izod notched impact energy, tensile modulus, tensile strength and elongation at break. The results of these tests indicated that the addition of lubricants and mineral fillers has a different effect on the property profile depending on the size of the functional filler. Examples 4 - 6 indicated that the addition of siloxane lubricant, with content of high molecular weight siloxane about 50%, and mineral fillers with the particle size around 0.3 micron did not make any substantial difference in the toughness of the final formulations. This is shown by comparing example 1, which does not have any lubricant or mineral fillers, with examples 4 - 6, which were shown to be still ductile in the Izod notched impact energy test, as indicated by a "P", referring to only a partial break. At the same time the addition of lubricants and mineral fillers with the particle size around 4 microns (examples 2 and 3) decreased toughness of the final formulations compared to example 1, which does not have any lubricant or mineral fillers, as demonstrated by their lower notched Izod impact energy and brittle results in break ductility.

In addition, the following aspects are disclosed:
1. A thermoplastic molding composition comprising:
   (A) 50 to 90 percent by weight relative to the weight of the composition (pbw) of an aromatic (co)poly(ester)carbonate,
   (B) greater than 0 wt.% to 10 wt. % of a mineral filler comprising quartz or silica, and
   (C) greater than 0 wt.% to 5 wt. % of a high molecular weight non-polar lubricant and most preferably a siloxane lubricant,
      wherein the siloxane is not polymerized with the aromatic (co)poly(ester)carbonate.
2. The composition of 1, wherein the aromatic (co)poly(ester)carbonate is present in the composition in an amount of 58 to 80 wt. %, preferably 64 to 73 wt. %.
3. The composition of 1, wherein the aromatic (co)poly(ester)carbonate is not polymerized with any polysiloxane.
4. The composition of any of the preceding aspects, wherein the mineral filler is present in the composition in an amount of 1 to 10 wt.%, and preferably from 2 - 5%
5. The composition of any of the preceding aspects, wherein the mineral filler is quartz.
6. The composition of any of the preceding aspects, wherein the mineral filler is silica.
7. The composition of any of the preceding aspects, wherein the mineral filler is a fused silica flour having a pH measured according to DIN ISO 10390 of 5.0 to 8.0.
8. The composition of 7, wherein the fused silica flour has an average particle size d₅₀ of 0.25 to 10.0 µm and a content of metal oxides ≤2% by weight based on component B.
9. The composition of 7 or 8, wherein component B has a content of aluminium oxide of ≤1% by weight.
10. The composition of any of 7-9, wherein component B has an Fe₂O₃ content of ≤0.1 % by weight.
11. The composition of any of 7-10, wherein component B has an average particle size d₅₀ of 3 to 5 µm.
12. The composition of any of 7-11, wherein component B has a pH measured according to DIN ISO 10390 of 5 to 6.5.
13. The composition of any of the preceding aspects, wherein component B has a specific BET surface area determined by nitrogen adsorption according to ISO 9277 of 2.0 to 8.0 m²/g.
14. The composition of any of the preceding aspects wherein a lubricant and preferably a siloxane lubricant as component C is present in the composition in an amount of 0.5 to 2 wt. %.
15. The composition of 14, wherein the lubricant comprises 30 to 80 wt. % siloxane, preferably 40 to 70 wt. % siloxane.
16. The composition of any of the preceding aspects, wherein component C is not a coating of any other component, but rather a separate component within the composition.
17. The composition of any of the preceding aspects further comprising component D, a rubber modified graft polymer, present in the composition in an amount greater than 0 to 20 wt. %.
18. The composition of 17, wherein component D is present in the composition in an amount of 5 to 15 wt. %, preferably 7 to 11 wt. %.
19. The composition of 17 or 18, wherein component D is at least one graft polymer of
   D.1: 5 to 95 % by weight of at least one vinyl monomer on
   D.2: 5 to 95 % by weight of a one or more elastomeric graft bases with glass transition temperatures below -10°C, wherein the glass transition temperature is determined by means of differential scanning calorimetry according to standard DIN EN 61006 at a heating rate of 10 K/min. with definition of the glass transition temperature as the mid-point temperature.
20. The composition of 19, wherein component D.1 is selected from the group consisting of styrene, α-methylstyrene and methyl methacrylate, acrylonitrile and maleic anhydride.
21. The composition of 19 or 20, wherein component D has a core-shell structure and component D.2 is selected from the group consisting of diene rubbers, acrylate rubber and silicone/ acrylate composite rubbers.
22. The composition of any of the preceding aspects further comprising component E, a vinyl copolymer, present in the composition in an amount greater than 0 to 40 wt. %.
23. The composition of 22 wherein component E is present in the composition in an amount of 5 to 35 wt. %, preferably 10 to 30 wt. %, most preferably 17 to 26 wt. %.
24. The composition of 22 or 23, wherein the vinyl copolymer is styrene acrylonitrile.
25. The composition of any of the preceding aspects further comprising at least one member selected from the group consisting of lubricant, mold release agents, nucleating agent, antistatic agent, thermal stabilizer, light stabilizer, hydrolytic stabilizer, filler, reinforcing agent, colorant, pigment, flame retarding agent and drip suppressant.
26. The composition of any of the preceding aspects, wherein the composition does not comprise glass fibers.
27. The composition of any of the preceding aspects, wherein the composition does not comprise polymerized polysiloxane.

## Claims

1. A thermoplastic molding composition comprising:
(A) 50 to 90 percent by weight, preferably 58 to 80 wt. %, most preferably 64 to 73 wt. %. relative to the weight of the composition (pbw) of an aromatic (co)poly(ester)carbonate,
(B) greater than 0 wt.% to 10 wt. %, preferably 1 to 10 wt.%, most preferably from 2 - 5%, of a mineral filler comprising quartz or silica, and
(C) greater than 0 wt.% to 5 wt. %, preferably 0.5 to 2 wt. %, of a high molecular weight non-polar lubricant and most preferably a siloxane lubricant,
wherein the siloxane is not polymerized with the aromatic (co)poly(ester)carbonate.

2. The composition of claim 1, wherein the aromatic (co)poly(ester)carbonate is not polymerized with any polysiloxane.

3. The composition of claim 1 or 2, wherein the mineral filler is a fused silica flour having a pH measured according to DIN ISO 10390 of 5.0 to 8.0, and has an average particle size d₅₀ of 0.25 to 10.0 µm and a content of metal oxides ≤2% by weight based on component B.

4. The composition of claim 3, wherein component B has a content of aluminum oxide of ≤1% by weight, and an Fe₂O₃ content of ≤0.1 % by weight.

5. The composition of any of the preceding claims, wherein component B has an average particle size d₅₀ of 3 to 5 µm.

6. The composition of any of the preceding claims, wherein component B has a pH measured according to DIN ISO 10390 of 5 to 6.5.

7. The composition of any of the preceding claims, wherein component B has a specific BET surface area determined by nitrogen adsorption according to ISO 9277 of 2.0 to 8.0 m²/g.

8. The composition of any of the preceding claims, wherein the siloxane lubricant comprises 30 to 80 wt. % siloxane, preferably 40 to 70 wt. % siloxane.

9. The composition of any of the preceding claims, wherein component C is not a coating of any other component, but rather a separate component within the composition.

10. The composition of any of the preceding claims further comprising component D, a rubber modified graft polymer, present in the composition in an amount greater than 0 to 20 wt. %, preferably 5 to 15 wt. %, most preferably 7 to 11 wt. %.

11. The composition of claim 10, wherein component D is at least one graft polymer of
D.1: 5 to 95 % by weight of at least one vinyl monomer selected from the group consisting of styrene, α-methylstyrene and methyl methacrylate, acrylonitrile and maleic anhydride on
D.2: 5 to 95 % by weight of a one or more elastomeric graft bases selected from the group consisting of diene rubbers, acrylate rubber and silicone/ acrylate composite rubbers with glass transition temperatures below -10°C, wherein the glass transition temperature is determined by means of differential scanning calorimetry according to standard DIN EN 61006 at a heating rate of 10 K/min. with definition of the glass transition temperature as the mid-point temperature.

12. The composition of any of the preceding claims further comprising component E, a vinyl copolymer, present in the composition in an amount greater than 0 to 40 wt. %, preferably 5 to 35 wt. %, more preferably 10 to 30 wt. %, most preferably 17 to 26 wt. %.

13. The composition of any of the preceding claims further comprising at least one member selected from the group consisting of lubricant different from component C, mold release agents, nucleating agent, antistatic agent, thermal stabilizer, light stabilizer, hydrolytic stabilizer, filler, reinforcing agent, colorant, pigment, flame retarding agent and drip suppressant.

14. The composition of any of the preceding claims, wherein the composition does not comprise glass fibers.

15. The composition of any of the preceding claims, wherein the siloxane is not polymerized with any other component in the composition.
